Europäisches Patentamt

**European Patent Office**

Office européen des brevets

(19)

(11) Publication number: **0 071 381**
**A2**

(12) # EUROPEAN PATENT APPLICATION

(21) Application number: **82303777.5**

(22) Date of filing: **19.07.82**

(51) Int. Cl.³: **G 11 B 5/55**
**G 11 B 17/02**

(30) Priority: **23.07.81 IT 6802181**

(43) Date of publication of application:
**09.02.83 Bulletin 83/6**

(84) Designated Contracting States:
**DE FR GB**

(71) Applicant: **Ing. C. Olivetti & C., S.p.a.**
**Via G. Jervis 77**
**I-10015 Ivrea(IT)**

(72) Inventor: **Bettini, Guiseppe**
**Via S. Giovanni Bosco 72**
**I-10015 Ivrea Turin(IT)**

(72) Inventor: **Tronzano, Sergio**
**Via Croce 3**
**I-10014 Ivrea Turin(IT)**

(74) Representative: **Pears, David Ashley et al,**
**REDDIE & GROSE 16 Theobalds Road**
**London WC1X 8PL(GB)**

(54) **Magnetic disc drive unit.**

(57) A carriage 19 is moved on guides 21, 22 by a stepping motor 40 to position a head 18 along a line 20 which is radial with respect to the mandrel of the disc drive. The motor is coupled to the carriage by flexible steel tapes 42 and 43 anchored at first ends to a boss 44 on the motor shaft 41 and doubling back through 180° over respective rollers 70, 73 journalled on the carriage. The roller 70 is on a precision bearing and the second end 48 of the corresponding strip 42 is anchored to a fixed point while the second end of the other strip is attached to a tensioning spring 59 so that only the roller 70 determines the carriage movement, this being half the strip movement for finer carriage positioning. There is also described an improved floppy disc centering arrangement wherein a counter-mandrel has a centering boss which is inserted through the hole in the disc into a cavity in the mandrel and slides axially on the counter-mandrel. A resilient ring compressed between the sliding boss and the counter-mandrel spreads fingers of the sliding boss into contact with the edge of the disc hole.

FIG.2

## MAGNETIC DISC DRIVE UNIT

The present invention relates to a magnetic disc drive unit comprising a base in which is journalled a rotatable mandrel for supporting a magnetic disc, a carriage carrying at least one magnetic head and a motor for moving the carriage on the base radially with respect to the mandrel.

For storing binary information on the concentric tracks of a magnetic disc, whether of rigid or flexible type, one of the objectives which all the designers of such units seek to attain is that of having a large number of recording tracks per radial unit of length, while making the operation of positioning the magnetic head on the tracks an economical one. Normally, open loop positioning systems, which operate without checking for and possibly correcting the position reached by the recording head on the selected track, achieve a satisfactory degree of accuracy in positioning, down to discs in which the distance between the tracks is of the order of a tenth of a millimetre (254 tracks per inch). For much closer track packing, it is essential to provide feedback control of the motor for positioning the head, based on checking the position attained, which is achieved for example using the system which involves following the track of a model disc by means of a service head (track following system). These last-mentioned positioning systems are much more expensive than open loop systems.

Typically, systems of the first type employ stepping motors which step by predetermined angular increments. In the motors which are commercially more wide-spread and which are less expensive, such increments are of the order of 200 steps per revolution.

One of the more economical methods of converting the rotary motion of the motor into a linear motion of the carriage on which the head is mounted involves using one or more flexible plates or strips which are fixed on the one hand to the boss of the motor and on the other hand to the carriage. The diameter of the boss is calculated in dependence on the travel of the carriage which can be produced within one revolution of the boss. The diameter of the boss and the angular increments of the motor determine the number of tracks per unit of length. In a known unit which has 254 tracks per inch, (10 per mm), the diameter of the boss is 12.7 mm, which can be considered as a minimum value for a sufficient degree of reliability of the unit, and the motor, of the 200 step type, is suitably controlled in such a way as to cause it to produce elementary angular increments of 1/400th of a revolution. That involves a more complex and expensive circuit for pilot control of the stepping moror, in order to double the number of steps thereof within a revolution, and an increased error around the position attained when the motor stops in the intermediate position between the 200 naturally stable steps of the motor.

A first object of the present invention is to provide a magnetic disc drive wherein the number of concentric tracks per radial unit can be very high and wherein positioning of the magnetic head on such tracks is effected by using a stepping motor of standardized type, by means of a boss-carriage conencting system which is simple, reliable and inexpensive, and which can also be easily mounted on units of known type, without radically changing or replacing the essential components of the actual units.

In accordance with this object the present invention provides a disc drive as defined in claim 1 below.

In a typical application, the disc drive according to the invention is capable of processing magnetic discs of flexible type, which are each contained in their own storage casing and which are commercially known as "floppy discs". Each disc is provided with a central hole which can be engaged by the rotary mandrel and a counter-mandrel member, which is movable axially, to clamp the disc with respect to the mandrel.

With this type of unit, it is very important that the magnetic disc is precisely centered with respect to the mandrel, before being clamped.

A magnetic disc drive is known, wherein the mandrel is provided with a cylindrical cavity within which is disposed a drum that is radially recessed to define radial segments capable of engaging the inside edge of the central hole in the disc when the disc is fitted into the mandrel. The counter-mandrel member has a frustoconical boss which is pushed into the drum for urging the various segments outwardly, thereby to centre the disc before it is clamped between the mandrel and the counter-mandrel member. This centering system has the disadvantage of using a mandrel which is different from the mandrels used in the most wide-spread units, with an increase in costs. This disc drive also requires the disc to be inserted in an inclined position with respect to the plane passing through the support surface of the mandrel, in order not to interfere with the drum which projects upwardly, the disc and the protective casing thereof subsequently being lowered. All this is achieved by suitable guide means which are movable with respect to the base and which increase the overall dimensions and cost of the unit.

A second object of the present invention is to provide a magnetic disc drive for floppy discs, which is simple, reliable, and economical and which overcomes the above-mentioned difficulty.

In accordance with this further object the invention provides a disc drive as defined in claim 13 below.

The invention will now be described in more detail, by way of example, with reference to the accompanying drawings, in which:-

Figure 1 is a partial plan view of a magnetic disc drive, in accordance with a first embodiment;

Figure 2 is a partial plan view of a magnetic disc drive, in accordance with a second embodiment;

Figure 3 is a view in section taken along line 3-3 in Figure 2;

Figure 4 is a side view of the device for centering the disc used in the unit according to the invention, in a rest position;

Figure 5 shows the detail of Figure 4 in a first operative position; and

Figure 6 shows the detail of Figure 4 in a second operative position.

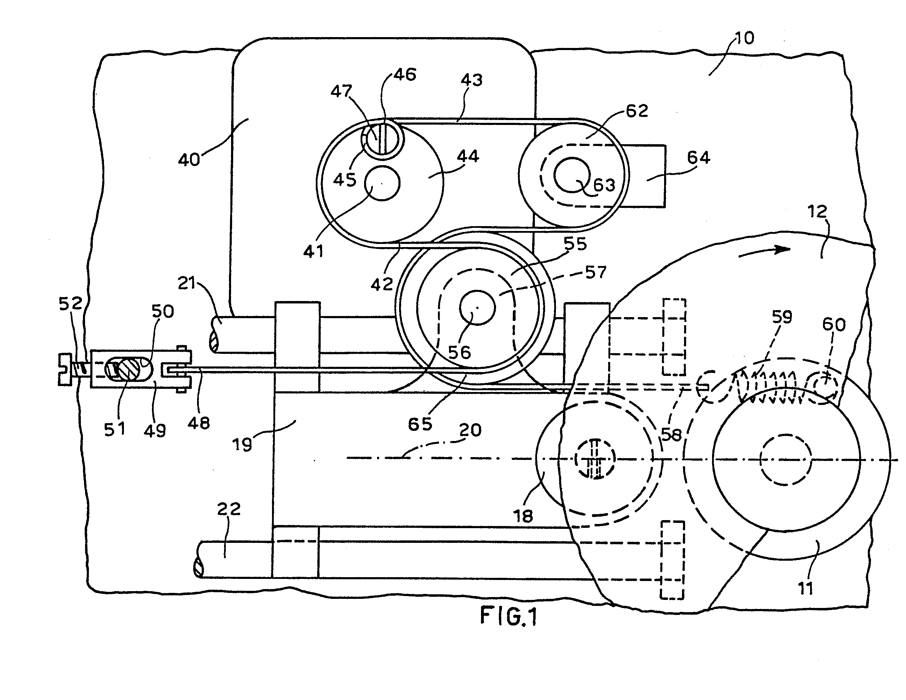

Referring to Figure 1, the magnetic disc drive in accordance with the first embodiment of the present invention comprises a base 10 on which a mandrel 11 is rotatably mounted, for carrying a magnetic disc 12 to be processed. The mandrel 11 is connected in any known manner to an electric motor (not shown).

The disc 12 may be of rigid or flexible type and may be permanently fixed to the mandrel 11 or may be removably connected thereto in any known manner, for example as will be described in greater detail hereinafter. The disc 12 also has at least one magnetizable surface on which binary data can be recorded on a plurality of concentric tracks which are equally spaced from each other.

A magnetic head 18 which cooperates with the magnetizable surface of the disc 12 is mounted on a carriage 19 movable along an axis 20 which is radial with respect to the mandrel 11, by means of a pair of guides 21 and 22 which are parallel to each other and which are mounted on the base 10.

A reversible electric motor 40 of stepping type is mounted on the base 10 and is capable of controlling the movement of the carriage 19 in two directions along the axis 20.

In accordance with a feature of the invention, the transmission assembly for converting the rotary movement of the shaft 41 of the motor 40 into a rectilinear motion of the carriage 19 comprises a pair of highly flexible metal strips 42 and 43 which are partially wrapped in offset planes around a boss 44 which is fixed to the shaft 41.  A first end 45, 46 of each of the respective strips 42 and 43 is fixed to the boss 44 by means of a pivot or stud 47, in the manner described in our published European patent application EP 0052477.  It will be apparent however that the two strips 42 and 43, or flexible members of a different type, may be fixed to the boss 44 in some other manner.

The strip 42 has a second end 48 which is fixed to the base 10 by means of a block 49 having a slot 50.  Disposed within the slot 50 is a fixed pin or stud 51.  A screw 52 is provided for adjusting the position of the block 49 with respect to the fixed pin 51.

The central portion of the strip 42 is wound through $180^{o}$ around a precision rolling bearing 55 of ball, roller or like type, which is mounted rotatably on a pin 56 carried by a bracket 57 extending to one side of the carriage 19.  The strip 43 has a second end 58 which is coupled to a spring 59 which in turn is connected to a pin 60 which is fixed to the base 10.

The strip 43 is also wound through $180^{o}$ around a fixed roller 62 mounted rotatably on a pin 63 carried by a bracket 64 which is fixed to the base 10, and through a further $180^{o}$ around a roller 65, thus being disposed in an inverted S-shaped configuration.  The roller 65 is also mounted rotatably on the pin 56 below the rolling bearing 55, in such a way that both the roller 65 and the rolling bearing 55 can rotate freely with respect to each other.

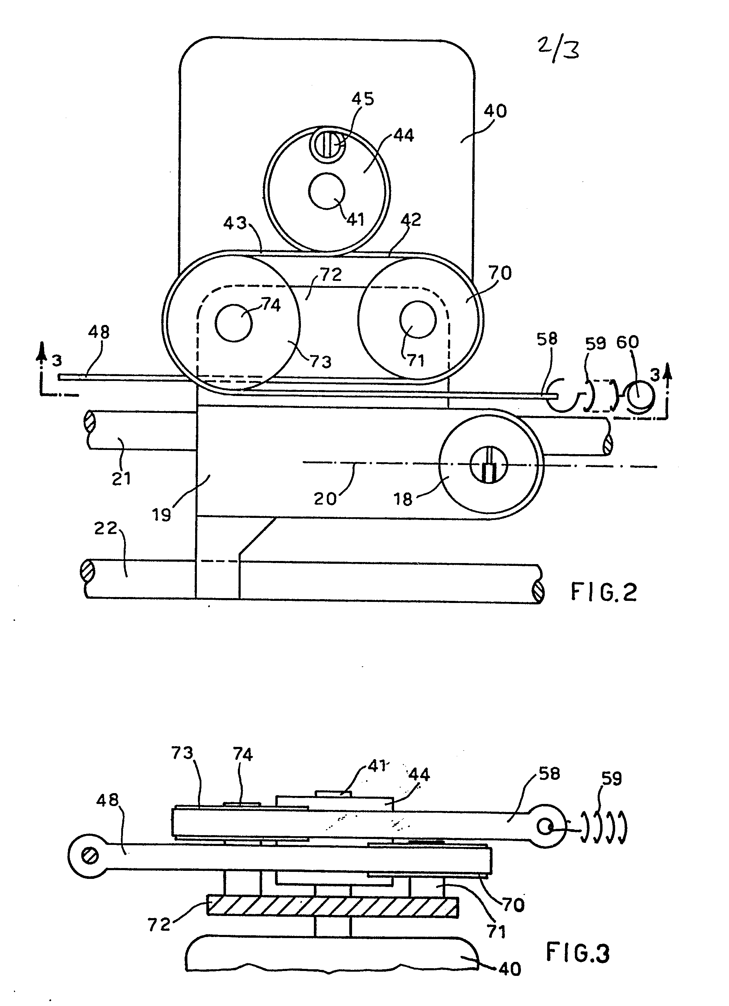

In a second embodiment as illustrated in Figure 2, the metal strip 42 is turned through 180° around a ball bearing assembly 70 which is mounted rotatably on a pin 71 which in turn is carried by a lateral bracket portion 72 of the carriage 19, while the metal strip 43 is turned through 180° around a roller 73 mounted rotatably on a pin 74 which is also carried by the bracket portion 72.

Using a precision direction-changing member such as a ball bearing assembly for the strip 42 which is anchored to the base means that the positioning errors in respect of the carriage 19 relative to the nominal positions at which it is to be positioned are contained within the order of a few μm, and are thus acceptable. However, it is possible to use a roller, even a roller which is not of a high degree of accuracy, as the direction-changing member for the strip 43 which is connected to the spring 59. In fact, by constantly applying to the strip 43 a force which is higher than the static and dynamic forces occurring, the spring 59 takes up any play which may occur in the rollers and in the entire transmission system. In addition, the diameters of the rollers 65, 73 and the ball bearing assemblies 55, 70 may be equal to or different from each other, without affecting proper operation of the transmission system.

With the above-described arrangement in respect of the strips 42 and 43, and in both embodiments, a predetermined angular increment of the shaft 41 of the motor 40 corresponds to a movement of the carriage 19, which is half the amount by which the strips 42 and 43 are wound on to or unwound from the circumference of the boss and the distance between the axes of the fixed pins 41 and 63 (Figure 1) or the pins 71 and 74 (Figure 2) carried by the carriage is substantially greater than the travel movement of the carriage 19. Accordingly, positional errors in respect of the stepping motor are halved at the carriage.

In particular, with a standard motor, of the type which is commonly most widely used, producing 200 steps per revolution, and with a boss 44 which is 12.7 mm in diameter, which gives totally acceptable fatigue bending of the strips 42 and 43, in each rotary step produced by the motor 40, the strips 42 and 43 move by about 0.2 mm on the circumference of the boss 44, while the carriage 19 and the head 18 are moved along the axis 20 by a distance of only 0.1 mm.  That permits a packing factor of 254 tracks per inch, which is typical of rigid (hard) discs, without altering the unitary angular increment of the motor 40.  It will be appreciated that the shorter travel movement produced at the carriage by one revolution of the boss may be easily compensated by using a plurality of heads which read different regions of the disc.  In addition, by actuating the screw 52, micrometer adjustments can easily be carried out at any moment to move the head to the reference position on the disc.

The invention is used to particular advantage in the floppy disc drives, especially for smaller size discs of say 5¼ inch (135 mm) diameter.

In accordance with present standards, the normal packing of data either on 8 inch (200 mm) floppy discs or on 5¼ inch (135 mm) floppy discs is 48 tracks per inch (tpi), (about 19 per cm), while the double-density packing is 96 tpi (about 38 tracks per cm). With these density values, the 8 inch discs accommodate 77 or 154 tracks and the 5¼ inch discs accommodate 40 or 80 tracks.

It is already conventional practice, for reasons of production rationalization and thus reduction in costs, to use the same positioning devices both in drives for 8 inch discs and in drives for 5¼ inch discs, and in which it is easy to select the two density values.  When using stepping motors producing 200 angular steps, and the boss-strip assembly, movement from track to track is produced by a boss which has a diameter of 16.8 mm, using two steps of the motor for normal density discs and a single step for double density discs. The travel movement of the carriage will thus require 154 steps for use with 8 inch discs and only 80 steps for use with 5¼ inch discs, in contrast to the 200 steps available.  As it is not prudent to halve the diameter of the boss, in order to avoid the danger of fatigue fracture of the strips, it will be apparent that the features of the stepping motors are utilised to a limited extent in the present-day drives for 5¼ inch floppy discs.

Use of the above-described connecting system comprising a boss and carriage with a movable pulley, in a 5¼ inch floppy disc drive permits the same positioning device of the apparatus to be used for processing normal discs, with a reduction in positional errors, while also making better use of the motor which can be smaller

0071381

- 7 -

and less accurate.    160 steps out of 200 will be used, in groups
of four for normal density and in groups of two for double density.
However, the packing of the tracks per radial unit can be double
without altering the circuit for pilot control of the stepping
motor, using the same diameter of boss as is used for processing
8 inch floppy discs.

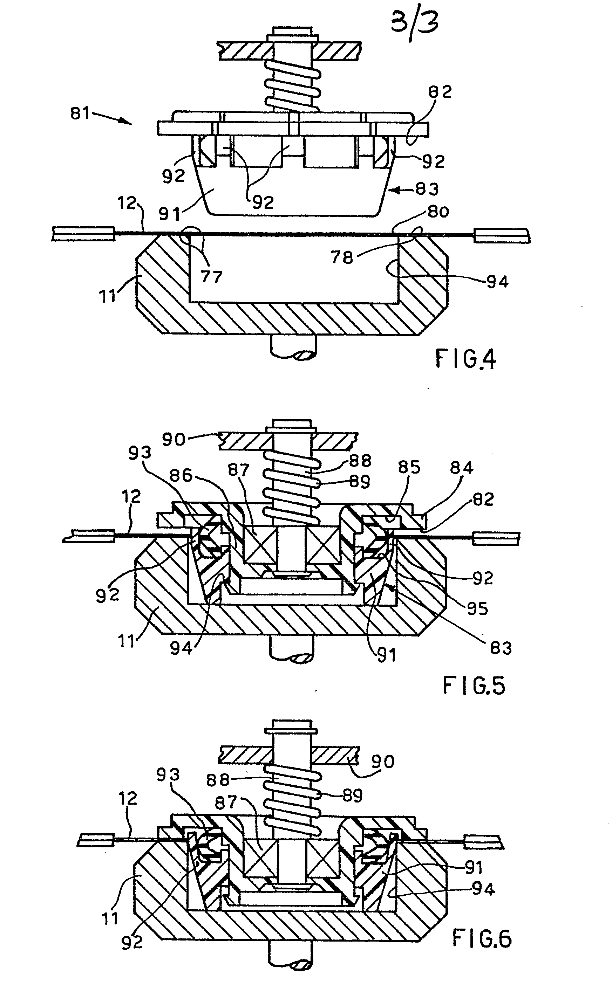

The unit according to the invention for processing flexible
magnetic discs is also provided with a novel device for centering
the disc with respect to the drive members thereof.  As is known,
each floppy disc is contained in its own protective casing and is
provided with a central hole 80 therethrough (see Figure 4) and
two oppositely disposed annular ring surfaces 77 disposed adjacent
teh hole 80, which are capable of being clamped between two clamping
locking regions 78 and 82 of the mandrel and a counter-mandrel
member 81 which represent the means for driving the disc.   The
counter-mandrel member 81 is movable axially firstly to permit the
disc 12 to be introduced and then to fix the disc with respect to
the mandrel 11.   Axial movement of the counter-mandrel member 81
is produced in any known manner, for example in the manner described
in above-mentioned patent application EP 0052 477.

In accordance with another feature of the present invention,
the counter-mandrel member 81 comprises an element 83 for centering
the disc 12 and an upper flange 84 (see Figure 5) on which there are
provided  an annular seat 85 and the region 82, having a flat
surface capable of co-operating with the disc 12, and a central
position 86 of substantially cylindrical shape, which co-operates
with a ball bearing assembly 87 mounted on a pin 88 which is coaxial
with respect to the mandrel 11.   A spring 89 is compressed between
a movable arm 90 and the assembly 87.

The  centering element 83 in turn comprises a central body
portion 91 of substantially frustoconical shape, which is mounted
coaxially with respect to the cylindrical portion 86 projecting
from the region 82, in such a way as to be capable of moving axially
with respect thereto.   The frustoconical element 91 is capable of
engaging into a cylindrical axial cavity 94 in the mandrel 11, the
diameter thereof being equal to that of the hole 80 in the disc 12.
A plurality of radial segments 92 are disposed at the top of the
central body portion 91 in such a way as to be radially pliable with respect to the body portion 91 and substantially vertical in their rest position.    The body portion 91 is also provided with an annular seat 95 adjacent the inside portions of  the segments 92.

Interposed between the flange 84 and the centering element 83 between the respective annular seats 85 and 95 is a resilient ring 93 which normally urges the element 83 into the position of maximum projection with respect to the flange 84, holding it locked against a circular shoulder 94 on the body portion 86.    By way of illustration, the ring 93 is of rubber and the cross-section thereof is in the form of an inclined V-shape, the apex of which can co-operate with the inward portion of the segments 92.

The mode of operation of the above-described counter-mandrel member 81 is as follows:

In the rest condition (see Figure 4), the arm 90 is raised from the mandrel 11, so that the counter-mandrel member 81 is also raised.    In this condition, a disc 12 which is contained in its protective casing can be easily inserted between the mandrel 11 and the counter-mandrel member 81 in any known manner.

To lock the disc 12 onto the mandrel 11 and to centre it with respect thereto, the arm 90 is lowered.    The frustoconical body portion 91 (see Figure 5) of the element 83 passes easily into the hole 80 in the disc 12 and continues to move downwardly together with the remaining parts of the counter-mandrel member 81 until reaching a condition of bearing against the bottom of the cylindrical cavity 94 in the mandrel 11.    In that position, the surface 2 of the flange 84 is still spaced from the disc 12.    The arm 90 then continues to move downwards.    In that way, the  element 86 also continues to move down while the lower element 83 remains firm.    The ring 93 is thus compressed and deformed and the apex thereof urges the radial segments 92 radially outwardly.    The segments 92 in turn act on the surface of the hole 80 of the disc 12 and perfectly centre the disc with respect to the mandrel 11.    The centering action takes place slightly before the surface 78 of the mandrel 11 and the surface 82 of the flange 84 compress the annular regions 77 of the disc 12.

As the arm 90 continues to move down (see Figure 6), the disc 12 which is already in a centered condition is  locked between the mandrel 11 and the counter-mandrel member 81 by the reaction of the spring 89 which is compressed by the arm 90.

In order to return to the initial rest condition, the arm 90 is raised until the counter-mandrel member 81 is again spaced from the mandrel 11.

CLAIMS

1.      A magnetic disc drive unit comprising a base in which is
journalled a rotatable mandrel for supporting a magnetic disc, a
carriage carrying at least one magnetic head and a motor for moving
the carriage on the base radially with respect to the mandrel and
wherein the movement of the carriage is effected by way of a
flexible member having one end connected to the shaft of the motor,
characterised in that the flexible member (42,43) is connected to the
carriage (19) by means of a movable pulley device (55,65 or 76,73)
which steps down the movements of the carriage with respect to those
imposed by the shaft (41) of the motor (40).

2.      A unit according to claim 1, characterised in that the
flexible member comprises two flexible strips (42 and 43), each of
which has a first end (45,46) fixed to a boss (44) on the shaft (41)
of  the motor (40) and a second end (48,58) connected to a part (10)
which is fixed with respect to the motor, and in that the movable
pulley device comprises a pair of direction-changing members (55,65 or
70,73) supported by the carriage (19) and in that each strip (42,43)
is wound partially around a corresponding direction-changing member
of the pair.

3.      A unit according to claim 2, characterised in that the
direction-changing members (55,65 or 70,73) are mounted rotatably on
the carriage (19).

4.      A unit according to claim 3, characterised in that the
direction-changing members (55 and 65) are mounted coaxially with
respect to each other on a pivot (56) on the carriage (19) and one
of the two strips (43) is also wound partially around a direction-
changing roller (62) which is rotatable about a fixed pivot (63).

5.      A unit according to claim 3, characterised in that the full
stroke of the carriage (19) is produced by a rotary movement of the
boss (44) which is not greater than one complete revolution, and in
that each strip (42,43) runs directly from the boss of the motor
shaft (41) to a corresponding direction-changing member (70,73), and
the direction-changing members rotate about two parallel axes (71,74) disposed at a mutual spacing which is substantially greater than the full stroke of the carriage.

6.      A unit according to any of claims 3 to 5, characterised in that a first one of the direction-changing members comprises a precision rolling bearing (55 or 70) mounted rotatably on the carriage (19) and around which a first strip (42) of the pair is wound, and in that a play take-up element (59) is connected between the second end (58) of the second strip (43) and the corresponding fixed part (60), for precise positioning of the  carriage with respect to the fixed part (51) anchoring the second end (48) of the first strip (42).

7.      A unit according to claim 6, characterised in that the play take-up element comprises a spring (59) which is tensioned between the second end (58) of the second strip (43) and the corresponding fixed part (60).

8.      A unit according to claim 6 or 7, characterised in that the rolling bearing is of the ball bearing, roller bearing or like type.

9.      A unit according to any of claims 2 to 6, characterised in that a spring (59) is tensioned between one of the second ends of the flexible strips (42,43) and the corresponding fixed part (60).

10.     A unit according to any of claims 2 to 9, characterised in that an adjusting element (49) is interposed between one of the second ends of the flexible strips (42,43) and the corresponding fixed part, (51), the adjusting element being slidable under the control of a screw (51) with respect to the said fixed part.

11.     A unit according to claims 9 and 10, characterised in that the second ends (48,58) of the two strips (42,43) are connected to the base (10) by way of the adjusting element (49) and by way of the spring (59) respectively.

12.     A unit according to claims 6 and 11, characterised in that the second end (48) of the first strip (42) is fixed to the adjusting

0071381

- 12 -

member (49) and the second end (58) of the second strip (43) is fixed to the spring (59).

13.    A magnetic disc drive unit comprising two drive members, namely a mandrel and a coaxial counter-mandrel, which are operable to clamp an inner peripheral zone of a disc with a central hole, characterised in that a first one (11) of the drive members has a cavity (94) and the second drive member (87) has a centering element (83) which is provided with a plurality of radial segments (92) and which is capable of being inserted through the hole in the disc into the cavity of the first drive member, a resilient element (93) being interposed between the centering element (83) and the second drive member (81), and a counter-acting surface (95) being movable axially with respect to the second member for deforming the resilient element (93) so as thereby to spread the said segments (92) radially into a condition of engagement with the said hole, for centering the disc with respect to the mandrel.

14.    A unit according to claim 13, characterised in that said counter-acting surface (95) is carried by the centering element (83) which is movable axially with respect to the second member (81).

15.    A unit according to claim 13 or 14, characterised in that the resilient element comprises a rubber ring (93).

16.    A unit according to claims 14 and 15, characterised in that the rubber ring (93) is inserted between two annular seats (95,85) on the centering element (83) and the second drive member (81) respectively.

17.    A unit according to claim 16, characterised in that the ring (93) is of substantially V-shaped cross-section, the vertical apex co-operating with the radially inner sides of the said segments (92).

18.    A unit according to any of claims 13 to 17, characterised in that the centering element (83) has a frustoconical body portion (91) and the radial segments (92) are disposed at the larger cross section of the frustoconical body portion.

19.     A unit according to claims 17 and 18, characterised in that
the segments (92) are formed by resilient portions which project
from the  body portion (91) and which internally define the annular
seat and the counter-acting surface (95) of the centering element
(83).

20.     A unit according to any of claims 13 to 19, characterised
in that the first drive member is the drive mandrel (11) which is
axially fixed and the second drive member is the counter-mandrel (81)
which moves axially with respect to the drive mandrel.

FIG.2

FIG.3

FIG.4

FIG.5

FIG.6